# EUROPEAN PATENT APPLICATION

(11) **EP 0 685 392 A1**
(43) Date of publication of application: **06.12.1995**
(21) Application number: 95107645.4
(22) Date of filing: 19.05.1995
(51) Int. Cl.: B65B 35/40, B65G 47/08

(54) **Device for forming-transferring rows of packets, in particular cigarette packets**

(30) Priority: 02.06.1994 IT GE940069
(71) Applicant: SASIB S.p.A., I-40128 Bologna (IT)
(72) Inventor: Balboni, Alessandro, I-40057 Granarolo Emilia (Bologna) (IT); Venturi, Romano, I-40133 Bologna (IT)
(74) Representative: Porsia, Bruno

(57) **Abstract**

A device for forming-transferring rows of packets, in particular cigarette packets, for example for packing a predetermined number of packets in a package, comprises conveyor means (3, 4) for supplying individual packets (P) to a station (5, 5', 6, 6', 7) for compacting the packets in a row (F) of packets (P) which are pressed against one another; a lateral aperture (10) for discharging at least part of the said row (F) of a predetermined length and a transverse stop (11) for aligning the said row (F) with the discharge aperture (10), as well as means for thrusting the row (F) of a predetermined length transversely through the discharge aperture (10). Between the compacting station (5, 5', 6, 6', 7) and the alignment stop (10) or the discharge aperture (10), there is a distance such that at the discharge aperture (10), the row (F) of a predetermined length is always spaced from the row (F) formed or being formed in the compacting station (5, 5', 6, 6', 7).

## Description

The subject of the invention is a device for forming-transferring rows of packets, in particular cigarette packets or the like, and especially of the type destined to be interposed between a cellophane wrapping machine and a machine for producing packages containing a predetermined number of packets of cigarettes, which forming-transferring device comprises:
- endlessly driven conveyor means, at the input end of which there is supplied a succession of individual packets of cigarettes which are spaced apart;
- a station for compacting the packets spaced apart into a row, in which the packets are pressed against one another, owing to the supply of successive packets spaced apart, against the preceding packet or packets which are maintained stationary relative to the conveyor means;
- a lateral discharge aperture which, in the direction of advance of the conveyor means, has a length corresponding to a row of packets consisting of a predetermined number of packets;
- a transverse stop for aligning the front packet in the row with the corresponding head edge of the discharge aperture, relative to the direction of advance of the row;
- lateral transverse thrust means which are disposed such as to coincide with the discharge aperture, and have a form substantially complementary to the latter, by means of which thrust means, at least a front part of the row, with a predetermined number of packets, such that the length of the row is the same as the length of the discharge aperture, is discharged through the said discharge aperture.

In order to produce packages which contain a predetermined number of packets of cigarettes disposed in a row, the packets which are discharged from the cellophane wrapping machines at predetermined time intervals, ie. which are spaced apart, must be compacted into a row of packets which are pressed against one another. The forming-transferring devices currently used for this purpose include at least one endless conveyor belt, and in particular two opposite endless conveyor belts which are driven endlessly, and which convey the packets which are spaced apart one after the other in the direction of a stop which is aligned with the front end of the discharge aperture. The successive packets are thrust against the immediately preceding packet, thus obtaining compacting of the packets into a continuous row. In operating conditions, a continuous row of packets is formed which is longer than the row of a predetermined length to be discharged in the subsequent packaging machine. This long row is stationary in the conveyor means, which on the other hand are driven endlessly. Thus the front part of the row which constitutes the row of a predetermined length to be discharged through the discharge aperture is subject to a considerable compression force in the direction of advance, and which is exerted by the remaining, upstream part of the continuous row of packets. Owing to the compressibility of the packets, this compression gives rise to reduction of the length of the part of the row to be discharged, such that the first packet in the row directly after the said part to be discharged can be disposed in an undefined position astride the head edge of the discharge aperture, and in the radius of action of the associated end of the lateral thrust means. Operation of the thrust means thus gives rise to damage to the said packet, which may give rise to blockage of the device, and may also require temporary stoppage of the device, and of the machine tools upstream and downstream of it. This obviously also affects the output both of the cellophane wrapping machine and of the subsequent packaging machine.

The invention is thus based on the object of providing a device for forming-transferring rows of packets comprising a predetermined number of packets, by means of which the above-described disadvantages of the known machines can be eliminated relatively simply and economically.

The above aims are achieved according to the invention by means of a forming-transferring device of the type initially described, in which the station for compacting the packets into a row of packets which are pressed against one another is provided directly downstream of the output end of the endless conveyor means, whereas the alignment stop and the discharge aperture (10) are spaced from the compacting station such that the row which comprises the predetermined number of packets at the discharge aperture is always spaced from the row formed or being formed in the compacting station, further conveyor means being provided between the endless conveyor means and the alignment stop, and which transport at least the front part of the row with the predetermined number of packets from the compacting station against the alignment stop, and can be alternately activated for the said transfer, and deactivated during formation of the row in the compacting station, and when the row is in the position in which it abuts the alignment stop.

This arrangement permits elimination of the compression action on the row with the predetermined number of packets, in the position in which it abuts the alignment stop. The said partial rows are in fact formed and transferred against the alignment stop one independently of the next, and at time intervals from one another.

According to a further feature, with the compacting station and/or the conveyor means, there are associated means for counting the packets supplied to the said station, and which in combination with a control unit provide a signal for activating the conveyor means when the predetermined number of packets has been reached in the row of packets in the compacting station.

Thus, in the compacting station, there are formed one after another at time intervals from one another only rows comprising the predetermined number of packets, and which are thus of a length which corresponds to the discharge aperture.

The conveyor means are provided with means for automatic deactivation when the predetermined row of packets is in the position in which it abuts the alignment stop.

According to a preferred embodiment, the compacting station consists of a stationary duct which is provided directly downstream of the output end of the conveyor means and is oriented coaxially to the path of the packets on the said conveyor means, and into which the packets are discharged one after the other, the end part of the duct, with reference to the direction of advance of the conveyor means, containing the discharge aperture, the alignment stop and the transverse thrust means. The packets discharged in the compacting duct by the endless conveyor means are thus thrust against the packet or packets previously discharged in the duct, thus forming a row of packets which press against one another, and gradually advance in the compacting duct.

The conveyor means advantageously consist of an endless conveyor with at least one transverse thrust fin, and the conveyor section of which is parallel to the compacting duct, whereas the thrust fin can be moved alternately from an inactive position, in which it is passed outside the duct in which the row moves, into an active position in which it projects transversely to the direction of drive, inside the compacting duct, through a continuous aperture which extends in the direction of transfer, engaging the rear of the last packet in the row in the compacting station.

Advantageously, whereas movement of the thrust fin into the active position is controlled by the control unit on the basis of counting the number of packets supplied in the compacting station, when the thrust fin is upstream of the last packet at the end of the row, automatic means are advantageously provided for moving the thrust fin into the inactive position when it reaches its end of drive travel position in the discharge aperture area.

The object of the invention also consists of other features which further improve the above-described forming-transferring device, and which are the subject of the subclaims.

The specific features of the invention and the resulting advantages will become apparent in greater detail from the description of some preferred embodiments, illustrated by way of non-limiting example in the attached drawings, in which:
Fig. 1 is a lateral schematic view of the device according to the invention;
Fig. 2 is a partial plan view from above of the device according to Figure 1, in the compacting station area;
Figs. 3 and 4 are an enlarged lateral view of the end of the conveyor means, on the initial side of the course of the thrust fin, with the latter respectively in the active and inactive position;
Fig. 5 is a view similar to Figures 3 and 4 of the conveyor means, on the final side of the course of the thrust fin;
Fig. 6 is a transverse cross-section of the transfer duct and of the conveyor means, with the thrust fin in the active position in which it engages with the rear of a row of packets.

With reference to the figures, a device for forming-transferring rows F of packets of cigarettes, consisting of a predetermined number of packets P, and which thus has a predetermined length, is disposed directly downstream of the discharge means, i.e. of a conveyor belt 1 of a cellophane wrapping machine. The discharge conveyor belt 1 of the cellophane wrapping machine supplies the packets P at regular time intervals, i.e. such that they are substantially spaced apart, and in a position in which they are laid flat, to collection means 2, which in turn supply the packets P one after another and in a position in which they are upright on one of their longer narrow sides, between a pair of opposite lateral conveyor belts 3 and 4, which engage by friction the opposite end sides of the packets P. The packets are moved on longitudinal, lateral, coplanar, parallel guides, between which there is formed a longitudinal aperture 9 of the transfer plane. The conveyor belts 3, 4 are driven endlessly, and at their output end there is connected a stationary compacting duct which is aligned coaxially to the conveyor path formed by the two endless conveyor belts 3 and 4. This duct has an opening which substantially corresponds to, or is slightly larger than, the surfaces of the packets P, and consists of two lateral walls 6, 6', an upper wall 7 and a lower wall which consists of the extensions of the two lateral transfer guides 5, 5'. The packets P are discharged by the conveyor belts 3, 4 one after the other into the compacting duct, where, since they are no longer driven, they remain stationary. Each successive packet is positioned against the immediately preceding packet, and in the compacting duct there is gradually formed a row of packets P which advances inside the duct, in steps, each of which corresponds to the thickness of a packet.

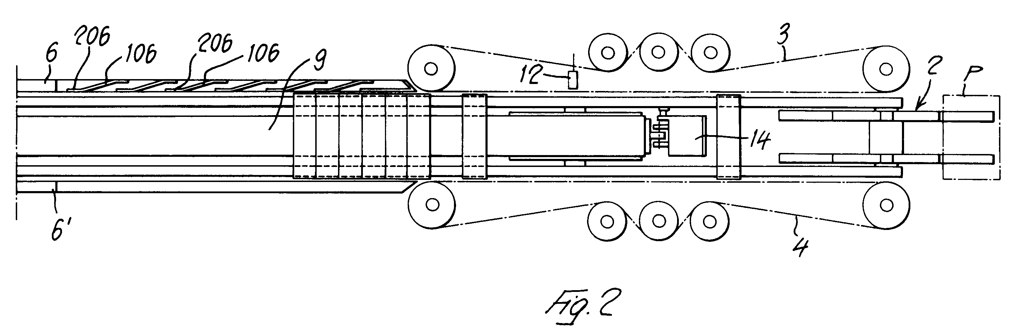

In order to retain the packets discharged into the compacting duct with a specific force of contrast against the relatively weak advance, and therefore to ensure that the subsequent packet is pressed against the previous packet, at least one of the lateral walls 6 of the compacting duct is formed such as to exert a specific greater force of friction on the side which faces it of the packets P. In particular, as shown from Fig. 2, this wall 6 can be provided with resilient means for compressing the packets transversely against the opposite lateral wall 6'. These means consist of a plurality of flexible blades 106 which are oriented inclined with their free ends in the direction of advance of the row of packets F, and the free ends of which 206 end with a section which is slightly folded, in a position substantially parallel to the lateral wall 6.

At the final section of the conveyor belts 3 and 4, there is provided a sensor 12 to detect passage of the packets P, which, in association with a control unit, permits counting of the number of packets supplied to the compacting duct. The sensor 12 can consist of a light barrier or the like, or any other detection means.

The control unit can be preset with a reference value of the predetermined number of packets in the row, which corresponds to the length of a discharge aperture 10 provided at the final end of the compacting duct, in one of the lateral walls 6. A transverse alignment stop 11 is disposed aligned with the head edge of the discharge aperture 10, on the final end of the compacting duct. There are also associated with the compacting duct conveyor means which can be activated and deactivated alternately. When counting of the packets P supplied to the compacting duct has reached a predetermined number, preset in the control unit, the latter activates the conveyor means which transport the row of packets F, with the predetermined number of packets, to the lateral discharge aperture 10, and against the alignment stop 11.

In order to permit formation of a new row F of packets, simultaneously with discharge of the previous row F through the lateral aperture 10, by means of a transverse thruster not shown in detail, the distance between the discharge aperture 10, i.e. its head end which faces the conveyor belts 3, 4, and the discharge outlet of the latter is greater than the predetermined length of the row F which is forming in the compacting duct.

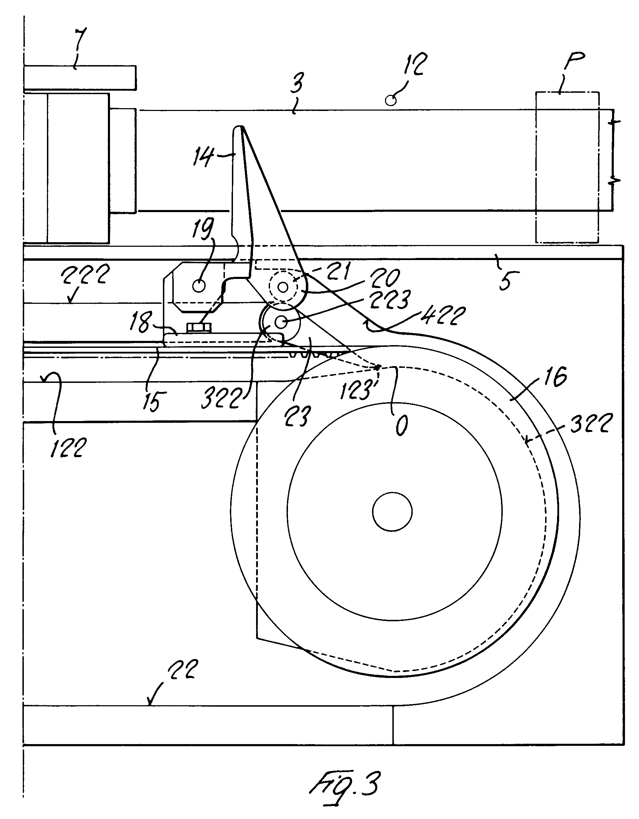

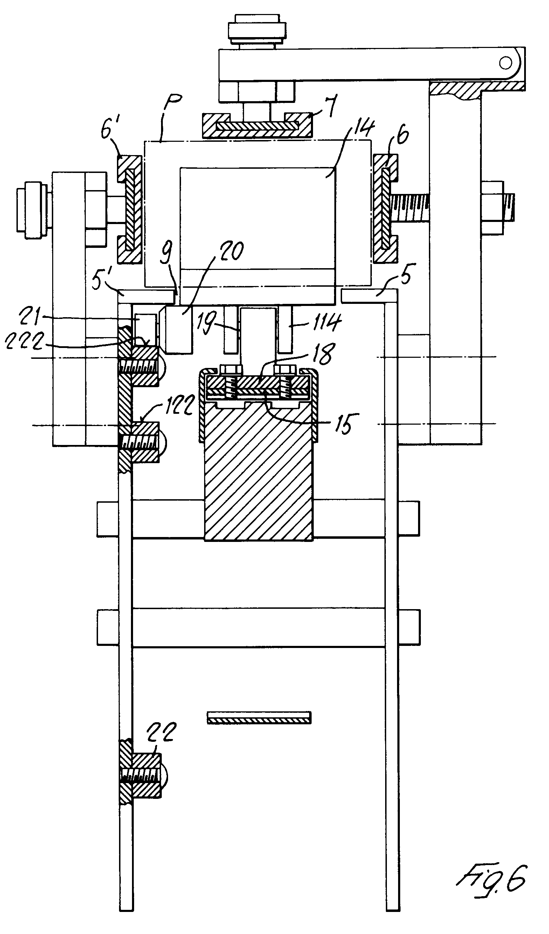

With particular reference to Figures 3 to 6, the conveyor means consist of at least one thrust fin 14 which is driven in a circular path closed on itself, by an endless conveyor 15. The circular path closed on itself has a branch which extends in parallel directly beneath the lower side of the compacting duct, and partially also under the final section of the conveyor belts 3, 4 whereas the thrust fin 14 can project between the two conveyor belts 3, 4, and inside the compacting duct, through the longitudinal aperture 9 between the lower guides, 5, 5' which extends for the entire length of the drive path of the thrust fin 14.

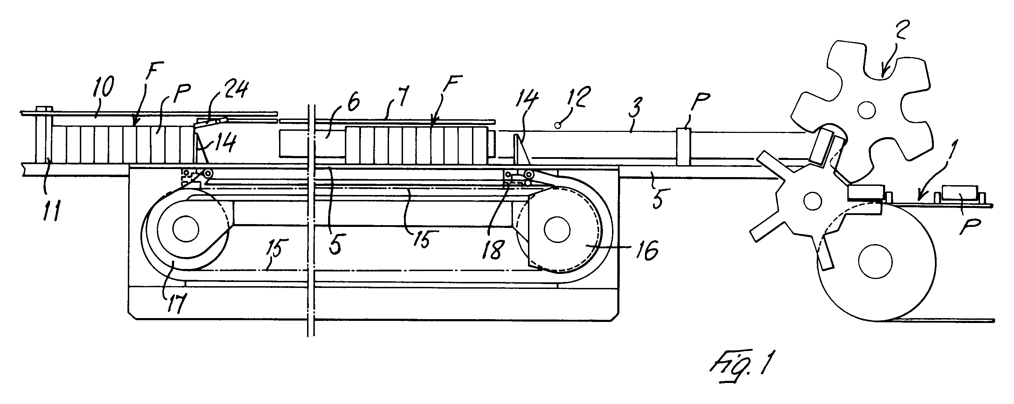

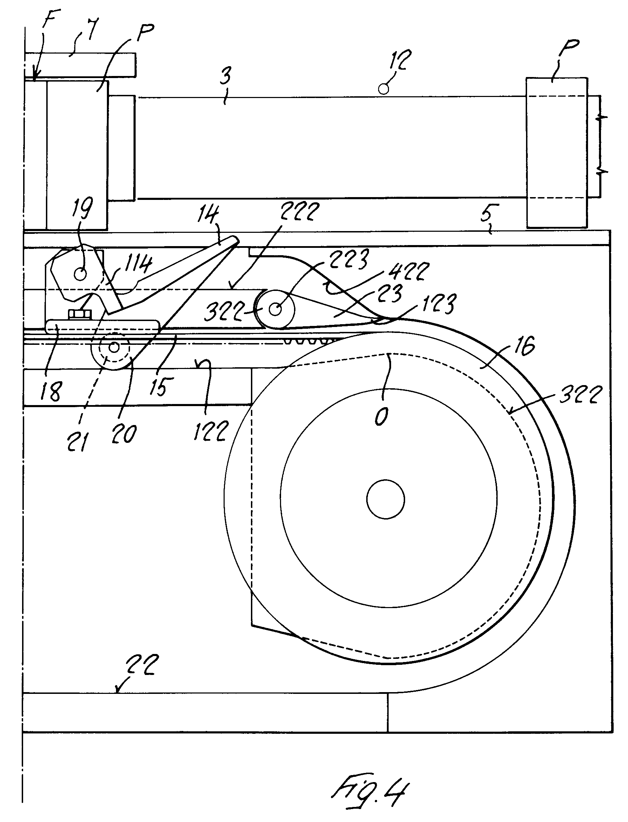

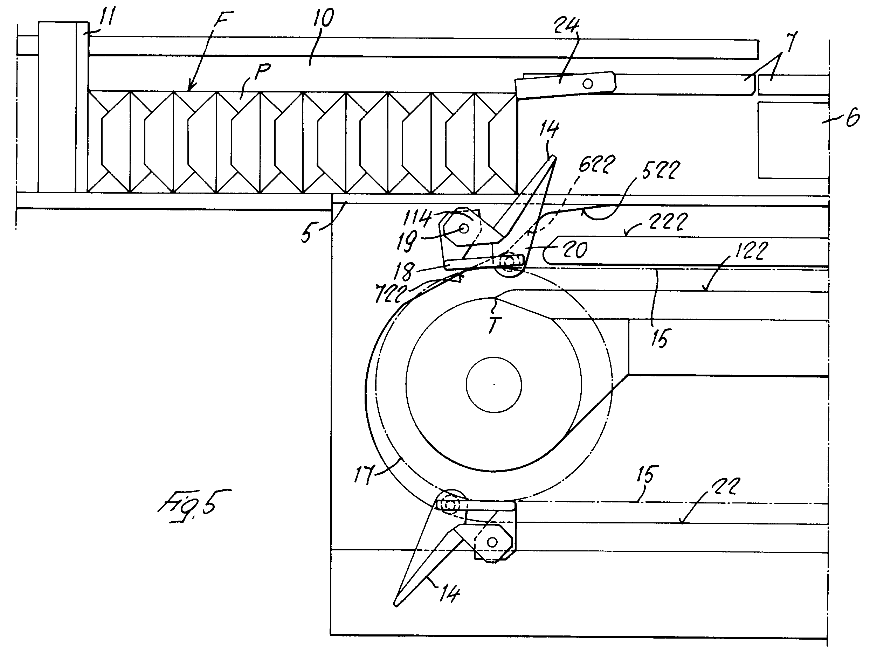

The conveyor 15 of the thrust fin 14 is returned around two pulleys 16, 17, at least one of which is motorized. A return pulley 16 is provided directly beneath the final section of the two conveyor belts 3, 4, such that the thrust fin 14 can begin its drive path upstream of the rear side of the final packet in the row F formed in the compacting duct. The other pulley 17 has its rotational shaft vertically aligned below the vertical median plane of the final packet in the row F, in the position in which it abuts the alignment stop 11, i.e. in a position such that the drive path of the thrust fin 14 ends when the row F is in the position in which it abuts the alignment stop. The thrust fins 14 are pivoted at 19 such as to oscillate around a transverse shaft, which is at right angles to the direction of advance of the belt 15, i.e. to the longitudinal axis of the compacting duct, at a support block 18 which is attached to the conveyor 15. The thrust fin 14 can be oscillated alternately from an inactive position, in which it is laid flat rearwards against the surface of the conveyor 15, and does not project inside the compacting duct, such that it passes beneath the lower side of the latter, i.e. beneath the lateral guides 5, 5' (Fig. 4) into an active position, in which it is oscillated into a vertical, erect position, and projects perpendicularly to the conveyor 15 and the guides 5, 5', inside the compacting duct (Figs. 1, 3, 6). The fin or fins 14 is or are oscillated by means of a transverse extension 20 of themselves, which is eccentric relative to the pivoting shaft 19, which supports a roller 21. The thrust fin 14 is supported on the rear end of a forked arm 114 which is perpendicular to the fin, and which is pivoted on the block 18 with its front end, with reference to the direction of transfer of the row F, whereas the roller 21 is provided on an extension 20 to the rear of the thrust fin 14. The block 18 has a base plate which is attached to the conveyor 15, along only a transverse line which is perpendicular to the longitudinal extension of the belt 15, for example by means of pairs of screws passed through. This attachment enables the block 18 to be disposed tangentially to the conveyor 15, when the latter passes along the return pulleys 16, 17, such that it can be curved according to the curvature of the pulleys 16, 17 (Fig. 5).

In order to control oscillation of the thrust fin 14 in accordance with the functions required of the device, the roller 21 associated with it cooperates with drive surfaces or tracks in the form of suitably shaped cams which are distributed around the entire closed circular path of the thrust fin 14. The drive tracks are disposed such that the roller 21 cooperates with them owing to the force of gravity. Thus, a first part of the said guide surfaces indicated by 22 extends along the return path of the thrust fin 14 from a point vertically aligned above the rotational shaft of the return pulley 17 downstream, with reference to the direction of transfer of the row F, to a point vertically aligned above the rotational shaft of the return pulley 16 upstream. In this case the roller 21 is pressed against the radially inner side of arcuate walls along the pulleys 16 and 17, and against the upper side of a straight wall which extends along the lower straight return section of the conveyor 15, parallel to the latter, and is connected uninterruptedly to the arcuate walls. Along the upper straight section of the conveyor 15 which is parallel to the compacting duct and is disposed directly beneath the latter, there are provided two straight drive tracks 122, 222, which are disposed one above the other, parallel to one another and to the compacting duct. The two drive tracks 122, 222 are spaced apart from one another to an extent corresponding to the angular displacement of the thrust fin 14 from one to the other of its active and inactive positions, and in the initial area directly downstream of the end point of the drive track 22 along the return pulley 16, there are provided means 23 for deflecting the roller 21, which can be moved alternately into two different positions, one in which the roller travels along the lower drive track 122, assuming the inactive, laid flat position, and the other in which it is moved along the upper drive track 222, such that it assumes the active, erect position. The lower drive track 122 extends substantially from the final point of the drive track 22, which is vertically aligned with the shaft of the return pulley 16 upstream, to the initial point of the track which is vertically aligned with the shaft of the pulley 17 downstream. The upper track 222 ends at its initial end with a deflection fin 23 which is supported such as to oscillate at its end adjacent to the track 222, on a drive shaft 223 which is perpendicular to the direction of transfer and to the path of the thrust fin 14. The free end 123 of the said deflection fin 23 ends in the area of the initial end of the lower track 122, and is preferably slightly concavely arcuate, with the inner side facing upwards. The drive shaft 223 can be activated by any motorized means not shown in detail. Advantageously, in order to ensure improved guiding of the roller 21, both the drive track 22 and the lower straight drive track 122 are extended slightly beyond the corresponding final and original points, in the area of the return pulley upstream 16, forming guide grooves. Thus, the lower track 122 is extended with an extension 322 also around the pulley 16, which is radially spaced inwardly relative to the track 22, whereas the latter is extended with a section 422 also above the area of the deflection fin 23, and has a path parallel to the latter, in the position of oscillation of the deflection fin 23 against the lower track 122, in order to deflect the roller 21 onto the upper track 222. In addition, the upper drive track 222 consists of a straight strip which has a thickness such that its side which faces the lower track 122 forms a similar guide groove, whereas the deflection fin 23 is tapered in the shape of a wedge at its free end 123, such as to complete the guide groove associated with the lower track 122 in the initial area in the position of the deflection fin 23, when the latter is oscillated upwards. With the upper straight track 222 there is also associated an opposite wall, in combination with which a similar guide groove is formed, and which upper wall consists of the lower side 5, 5' of the compacting duct. All the grooves thus formed have a width slightly greater than the roller 21. In order to permit raising of the thrust fin 14 upstream of the final packet at the rear of a row F formed in the compacting duct, and which is disposed immediately adjacent to the output end of the conveyor belts 3, 4, the return pulley upstream 16 is disposed beneath the final section of the two conveyor belts 3, 4, such that the original end of the drive track, and in particular the upper track 222, is disposed upstream of the output end of the conveyor belts 3, 4.

The lower drive track 122 ends substantially at the point T which is vertically aligned with the shaft of the pulley downstream 17, and substantially with the intermediate vertical plane, and in particular the median point of the final packet P in a row F, in the position in which it abuts the stop 11 of alignment of the row F with the discharge aperture 10. The upper track 222 ends slightly upstream of the lower stop 122, such that the thrust fin 14 remains in the active erect position in which it presses against the side of the final packet in the row F, until the row F is pressed against the alignment stop. The upper drive track 222 is advantageously extended slightly in the drive direction, such that the thrust fin 14 is maintained in the active, erect position for a short time, during which it exerts an action of compression of the row F against the alignment stop. The drive track 22, the initial section of which extends around the outer side of the return pulley 17 downstream, has an extension beyond the point of origin which is vertically aligned with the shaft of the pulley 17, and which is superimposed on the final section of the lower track 122, and also partially on the final section of the upper track 222. This extension has three segments 522, 622 and 722 with different inclinations, downwards and in the direction of advance of the thrust fin 14. The segments 522, 622, 722 form a shaped guide track such that the thrust fin 14 is gradually oscillated into the inactive position in which it is laid flat, as the conveyor 15 advances, with a movement assimilable to gradual sliding of the thrust fin 14 beneath the lower rear edge of the final packet in the row F, in the position in which it abuts the alignment stop 11, without interfering further with the said final packet in the row.

Advantageously, in order to prevent the packets in the row F which are still pressed lightly against one another from being able to expand once more resiliently during the stage when the thrust fin 14 is being laid flat in the inactive position, at the end of the lateral discharge aperture 10 which faces the conveyor belts 3 and 4, there is provided a removable retention stop 24. This removable retention stop 24 can consist of an oscillating fin which pivots on the upper side of the compacting duct, around a horizontal shaft which is perpendicular to the longitudinal extension of the duct, and the end of which where there is no stop forms a transverse surface which is substantially aligned with, or projects slightly inside the discharge aperture 10, on the head side which faces the conveyor belts 3 and 4. In this case, the retention fin 24 is passive, and descends into the retention position automatically by gravity, when the rear side of the final packet in the row F is thrust by the thrust fin 14 beyond its free end, whereas it is thrust and retained in the raised position when the row F is transferred against the alignment stop 11, by the upper sides of the packets.

The conveyor 15 of the thrust fin 14 is driven synchronously with the frequency of supply of the individual packets supplied by the lateral conveyor belts 3, 4, such that the thrust fin 14 is in the position of the initial end of the rolling surfaces 122, 222, i.e. directly upstream of the deflection fin 23 which is in phase with the free spaces between two successive packets P. Obviously, according to the frequency of supply of the individual packets, the drive speed of the conveyor 15, and the length predetermined for the row F, as well as the frequency of discharge of the rows F from the compacting duct through the discharge aperture 10, two or a plurality of thrust fins 14 can be provided, which are disposed at different points of the conveyor 15, in accordance with the requirements of synchronization with the spaces between two successive packets P, and with the phases of forming-compacting of the rows F.

The drive means for oscillating the thrust fin 14 can also be of another type, for example electromagnetic means or the like. However the mechanical embodiment prevents the need for mobile electrical connections, providing constantly satisfactory operation but without requiring a complex and costly structure.

The invention is not of course limited to the embodiments described and illustrated above, but can be widely varied and modified, in particular from the point of view of design, without departing from the underlying principle described above and claimed hereinafter.

## Claims

1. Device for forming-transferring rows of packets, in particular cigarette packets or the like, and especially of the type destined to be interposed between a cellophane wrapping machine and a machine for producing packages containing a predetermined number of packets of cigarettes, which forming-transferring device comprises:
- endlessly driven conveyor means (3, 4), at the input end of which there is supplied a succession of individual packets (P) of cigarettes which are spaced apart;
- a station (5, 5', 6, 6', 7) for compacting the packets (P) spaced apart into a row (F), in which the packets are pressed against `one another, owing to the supply of successive packets (P) spaced apart, against the preceding packet or packets (P) which are maintained stationary relative to the conveyor means (3, 4);
- a lateral discharge aperture (10) which, in the direction of advance of the conveyor means (3, 4), has a length corresponding to a row of packets (F) consisting of a predetermined number of packets;
- a transverse stop (11) for aligning the front packet in the row (F) with the corresponding head edge of the discharge aperture (10), relative to the direction of advance of the row (F);
- lateral transverse thrust means which are disposed such as to coincide with the discharge aperture (10), and have a form substantially complementary to the latter, by means of which thrust means, at least a front part of the row (F), with a predetermined number of packets, such that the length of the row is the same as the length of the discharge aperture (10), is discharged through the said discharge aperture (10), characterized in that
- the station (5, 5', 6, 6', 7) for compacting the packets into a row (F) of packets (P) which are pressed against one another is provided directly downstream of the output end of the endless conveyor means (3, 4), whereas the alignment stop (11) and the discharge aperture (10) are spaced from the compacting station (5, 5', 6, 6', 7) such that the row (F) which comprises the predetermined number of packets at the discharge aperture (10) is always spaced from the row (F) formed or being formed in the compacting station (5, 5', 6, 6', 7);
- further conveyor means (14, 15) are provided between the endless conveyor means (3, 4) and the alignment stop (11) or the discharge aperture (10), which transport at least the front part of the row (F) with the predetermined number of packets (P) from the compacting station (5, 5', 6, 6', 7) against the alignment stop (11), and the said conveyor means (14, 15) can be alternately activated for the said transfer, and deactivated during formation of the row (F) in the compacting station (5, 5', 6, 6', 7), and when the row (F) is in the position in which it abuts the alignment stop (11).

2. Device according to Claim 1, characterized in that with the compacting station (5, 5', 6, 6', 7) and/or the conveyor means (3, 4) there are associated means for counting the individual packets (P) supplied to the said compacting station (5, 5', 6, 6', 7), and which in combination with a control unit provide a signal for activating the conveyor means (14, 15) when the predetermined number of packets has been reached in the row (F) of packets in the compacting station (5, 5', 6, 6', 7), such that there are formed one after another at time intervals from one another only rows (F) comprising the predetermined number of packets (P), and which are thus of a length which corresponds to the discharge aperture (10).

3. Device according to either of Claims 1 or 2, characterized in that the conveyor means (14, 15) are provided with means (21, 522, 622, 722) for automatic deactivation at the final end of the conveyor course, when the predetermined row (F) of packets is in the position in which it abuts the alignment stop (11).

4. Device according to Claim 3, characterized in that the automatic means (21, 522, 622, 722) for deactivating the conveyor means (14, 15) in the transfer end of travel position, corresponding to the position in which the row (F) abuts the alignment stop (11), are such that the conveyor means (14, 15) are deactivated after having completed a further limited course of slight compression against the alignment stop (11) in the drive direction of the row (F) of packets, there being provided a removable retention stop (24) for the row (F) in the said compression condition, which engages the rear side of the final packet in the row (F) alternately with the drive means, and is triggered automatically in the active retention position.

5. Device according to Claim 1 or one or more of Claims 2 to 4, characterized in that the compacting station consists of a stationary duct (5, 5', 6, 6', 7) which is provided directly downstream of the output end of the conveyor means (3, 4) and is oriented coaxially to the path of the packets on the said conveyor means (3, 4), and into which the packets (P) are discharged one after the other, there being provided in its end part with reference to the direction of advance of the conveyor means (3, 4), the discharge aperture (10), the alignment stop (11) and the transverse thrust means.

6. Device according to one or more of the preceding claims, characterized in that the conveyor means consist of an endless conveyor (15) which is driven endlessly, and at least one transverse thrust fin (4), the drive section of which belt (15) along the transfer course of the row (F) is parallel to the compacting duct (5, 5', 6, 6', 7), whereas the thrust fin (14) is attached to the conveyor (15) such that it can be moved alternately from an inactive position, in which it passes outside the compacting duct (5, 5', 6, 6', 7) of the row (F), into an active position in which it projects transversely to the direction of transfer, inside the compacting duct (5, 5', 6, 6', 7) through a continuous aperture (9) which extends in the direction of transfer, engaging the rear of the last packet in the row (F) in the compacting station (5, 5', 6, 6', 7).

7. Device according to Claim 1 or one or more of Claims 2 to 6, characterized in that the conveyor means (3, 4) consist of a pair of opposite lateral conveyor belts, between which the packets (P) are engaged, whereas the packets are moved at least in the area of the final section of the conveyor belts (3, 4) on lower lateral guides (5, 5'), between which there extends the central aperture (9) for the thrust fins (14), the initial section of the transfer path of the thrust fins (14) also extending partially in the final section of the conveyor belts (3, 4).

8. Device according to Claim 6 or 7, characterized in that the thrust fins (14) are pivoted such as to oscillate around a shaft (19) which is perpendicular to the direction of drive and parallel to the conveyor (15), to an attachment block (18) on the conveyor (15), whereas, in a position which is eccentric relative to the oscillation shaft (19), there is associated with the fin a roller (21) which co-operates with drive tracks (22, 122, 222, 322, 422, 522, 622, 722) provided at least along the section of the conveyor (15) which is adjacent to the compacting duct (5, 5', 6, 6', 7), and which are shaped so that they control oscillation of the thrust fin (14) alternately into the active position, in which it is disposed perpendicularly to the conveyor (15) and projects transversely to the direction of transfer inside the compacting duct (5, 5', 6, 6', 7), and to the final section between the conveyor belts (3, 4), or into the inactive position in which the thrust fin (14) is laid flat towards the conveyor (15) and passes outside the corresponding side (5, 5') of the compacting duct and the final section between the conveyor belts (3 and 4).

9. Device according to Claim 8, characterized in that along the section of the conveyor (15) which is adjacent to the corresponding side of the compacting duct (5, 5', 6, 6', 7) and of the final section between the conveyor belts (3, 4), there are provided two straight drive tracks (122, 222), which are parallel to one another and relative to the said section of the conveyor (15), and are disposed superimposed on one another at different distances from the facing side (5, 5') of the compacting duct (5, 5', 6, 6', 7) and of the final section between the conveyor belts (3, 4), the distance of the said two control guides (122, 222), corresponding to the angular amplitude of the arc travelled by the roller (21) for oscillation of the thrust fin (14) from the active position to the inactive position and vice versa, and each of the said two drive tracks (122, 222) can be travelled alternately by the roller (21) of the thrust fin (14), by virtue of means (23) for deflecting the roller (21) to one or the other of the drive tracks (122, 222) which are provided upstream of the initial end of the said two drive tracks (122, 222), and are controlled by the control unit on the basis of the number of packets supplied in the compacting station (5, 5', 6, 6', 7).

10. Device according to Claim 9, characterized in that the deflection means consist of a deflection fin (23) which is supported on a drive shaft (223) at the initial end of the upper drive track (222), such as to oscillate around a shaft which is perpendicular to the direction of drive and parallel to the conveyor (15), and which can be alternately lowered with its free end (123) facing in the direction opposite the drive direction, against the lower drive track (122), and raised by the latter to an extent greater than the diameter of the roller (21), by drive means controlled by the control unit.

11. Device according to Claims 8 to 11, characterized in that at the final end of the drive tracks (122, 222), in the area of end of transfer travel of the thrust fin (14), there is provided a further drive track (522, 622, 722) opposite the said first two, and which has a shape such as to give rise to gradual oscillation of the thrust pin (14) from the active erect position, in the condition in which the row (F) is compressed against the alignment stop (11), into the inactive position in which it is laid flat, with a movement similar to gradual sliding, with rearward deflection of the deflection fin (14) beneath the lower rear edge of the final packet (P) in the row (F).

12. Device according to one or more of Claims 6 to 11, characterized in that the thrust fin is provided in an intermediate position between the oscillation shaft (19) on the attachment block (18), and the rotational shaft which is parallel to the latter of the roller (21), the latter cooperating with the drive tracks (22, 122, 222, 322, 422, 522, 622, 722), by the effect of gravity, the conveyor means being associated with the lower side (5, 5') of the compacting duct and the final section between the conveyor belts (3, 4).

13. Device according to one or more of Claims 5 to 12, characterized in that one wall (6) of the compacting duct, which wall is perpendicular to the sliding plane (5, 5') of the row (F), has means (106, 206) for braking the packets (P) discharged into the compacting duct by the conveyor belts (3, 4).

14. Device according to Claim 13, characterized in that the braking means consist of resilient tongues (106, 206) which provide calibrated compression of the packets (P) in the row (F) against the opposite wall 6'.

15. Device according to Claim 1 or Claims 2 to 14, characterized in that the conveyor means can be provided with two or more thrust fins (14), each of which can be moved independently of the other into the active and inactive positions, and which are distributed along the conveyor (14), corresponding to the frequency of formation of the rows (F) in the compacting station (5, 5', 6, 6', 7).

16. Device according to Claim 1 or Claims 2 to 15, characterized in that the conveyor means are driven such that the thrust fins (14) are synchronized with the free spaces between two successive packets (P) in the conveyor means (3, 4).
